**Europäisches Patentamt**

(19) **European Patent Office**

**Office européen des brevets**

(11) Veröffentlichungsnummer: **0 017 203**
**B1**

(12) # EUROPÄISCHE PATENTSCHRIFT

(45) Veröffentlichungstag der Patentschrift:
**29.12.82**

(21) Anmeldenummer: **80101696.5**

(22) Anmeldetag: **29.03.80**

(51) Int. Cl.³: **B 60 T 7/20,** F 16 D 51/00

(54) Radbremse, insbesondere Auflauf-Radbremse.

(30) Priorität: **10.04.79 DE 2914468**

(43) Veröffentlichungstag der Anmeldung:
**15.10.80 Patentblatt 80/21**

(45) Bekanntmachung des Hinweises auf die Patenterteilung:
**29.12.82 Patentblatt 82/52**

(84) Benannte Vertragsstaaten:
**AT BE FR GB IT NL**

(56) Entgegenhaltungen:
**EP-A-0 011 589**
**DE-A-2 248 061**
**DE-A-2 264 615**
**DE-A-2 413 131**
**FR-A-1 194 744**

(73) Patentinhaber: **Peitz sen., Josef, Pater Ewald Strasse 29,**
**D-4790 Paderborn (DE)**

(72) Erfinder: **Peitz sen., Josef, Pater Ewald Strasse 29,**
**D-4790 Paderborn (DE)**

(74) Vertreter: **Stracke, Alexander, Dipl.-Ing. et al,**
**Patentanwälte Dipl.-Ing. Loesenbeck Dipl.-Ing. Stracke**
**Jöllenbecker Strasse 164 Postfach 5605,**
**D-4800 Bielefeld 1 (DE)**

Radbremse, insbesondere Auflauf-Radbremse

Die vorliegende Erfindung betrifft eine Radbremse, insbesondere Auflauf-Radbremse, mit zwei Bremsbacken, bei der die bei Vorwärtsfahrt auflaufende erste Bremsbacke auf mindestens einem Führungsnocken, einer Führungsrolle od. dgl. eines Trägers gelagert ist, der durch ein in Auflaufrichtung der ersten Bremsbacke wirkendes Zuspannglied gegen die Bremstrommel spreizbar ist und mit einer dem Zuspannglied abgewandten Kante an der zweiten Bremsbacke in Umfangsrichtung abgestützt ist, wobei die erste Bremsbacke in den Bereichen, in denen sie auf den Führungsnocken, Führungsrollen od. dgl. aufliegt, mit Steigbahnen versehen ist, die mit der äußeren Krümmung der Bremsbacke jeweils ein sich in Auflaufrichtung verjüngende Keilfläche einschließen und die zweite Bremsbacke bei Vorwärtsfahrt an einem festen Widerlager abgestützt ist.

Eine Radbremse mit den Merkmalen des Oberbegriffs des Anspruches 1 ist Gegenstand einer älteren, nicht zum Stand der Technik gehörenden europäischen Patentanmeldung (EP-A-11 589, veröffentlicht am 28. Mai 1980).

Bei Radbremsen der vorerwähnten Art sind aufgrund der Anordnung der Steigbahnen an der ersten Bremsbacke und der Abstützung dieser Steigbahnen auf Führungsnocken, Führungsrollen od. dgl. des Trägers enorme Bremskräfte in Vorwärtsrichtung erzielbar, da sich die erste Bremsbacke über die erwähnten Steigbahnen gegen die Bremstrommel gewissermaßen festkeilt.

Der vorliegenden Erfindung liegt die Aufgabe zugrunde, eine Radbremse der gattungsgemäßen Art so zu gestalten, daß der vorerwähnte vorteilhafte Effekt auch bei Abbremsung in Rückwärtsfahrtrichtung eintritt.

Diese Aufgabe wird nach der Erfindung dadurch gelöst, daß die zweite Bremsbacke durch einen beim Abbremsen in Rückwärtsfahrtrichtung auf ihr dem Zuspannglied zugewandtes Ende einwirkenden Vorsprung, Mitnehmer od. dgl. der ersten Bremsbacke in Umfangsrichtung verschiebbar ist.

Beim Abbremsen in Rückwärtsfahrtrichtung kann also die zweite Bremsbacke mittels der ersten Bremsbacke in Umfangsrichtung verschoben werden, wodurch auch der Träger mit seinen Führungsnocken, Führungsrollen od. dgl. entsprechend in Umfangsrichtung verschoben wird. Durch diese Verschiebung des Trägers wird wiederum die erste Bremsbacke entlang ihrer Steigbahnen gegen die Trommel angepreßt, so daß auch beim Abbremsen in Rückwärtsfahrtrichtung die enorm hohen Bremskräfte auftreten, die bei einer Konstruktion mit Steigbahnen und Abstützung derselben auf Nocken, Rollen od. dgl. eines Trägers auftreten.

Die erfindungsgemäße Bremse weist neben den obengenannten Wirkungen auch die Funktion einer sogenannten Duo-Servo-Bremse auf.

Duo-Servo-Bremsen sind allgemein bekannt.

Zum Stand der Technik sei noch auf die DE-A-2 246 615 hingewiesen. Aus dieser Druckschrift ist ein Teil der im Oberbegriff des Hauptanspruches aufgeführten Merkmale schon bekannt. Beim Gegenstand der vorgenannten Literaturstelle sind nämlich beide Bremsbacken auf je einem mit Steigbahnen versehenen Träger gelagert. Jede Bremsbacke hat jedoch ihren eigenen Träger, der fest am Gehäuse schwenkbar gelagert ist.

Ein Ausführungsbeispiel der Erfindung ist in den Zeichnungen dargestellt und wird im folgenden näher beschrieben. Es zeigt

Fig. 1 einen Schnitt durch eine Auflauf-Radbremse gemäß der Erfindung in Normalstellung, d. h., im ungebremsten Zustand,

Fig. 2 einen Schnitt durch die Bremse gemäß Fig. 1 bei Rückwärtsfahrt,

Fig. 3 einen Schnitt durch die erfindungsgemäße Bremse nach Betätigung einer nicht dargestellten Handbremseinrichtung.

Die in den Zeichnungen dargestellte Auflauf-Radbremse weist eine bei Vorwärtsfahrt auflaufende erste Bremsbacke 1 auf, die auf einem mit Führungsrollen 2 versehenen Träger 3 gelagert ist.

Am Träger 3 ist über ein Mitnahmestück 4 eine zweite Bremsbacke 5 abgestützt, deren anderes Ende bei Vorwärtsfahrt an einem ortsfesten Widerlager 6 abgestützt ist.

Durch einen Doppelpfeil mit den Buchstaben V und R sind in den Zeichnungen Vorwärtsfahrtrichtung und Rückwärtsfahrtrichtung gekennzeichnet.

Die erste Bremsbacke 1 ist in den Bereichen, in denen sie auf den Führungsrollen 2 des Trägers 3 aufliegt, mit Steigbahnen 7 versehen, die mit der äußeren Krümmung der Bremsbacke 1 eine sich in Auflaufrichtung verjüngende Keilfläche einschließen.

Der Träger 3 ist durch ein Zuspannglied 8 gegen die Bremstrommel 9 spreizbar.

Bei dem in den Zeichnungen dargestellten Ausführungsbeispiel handelt es sich um eine Auflauf-Radbremse. Ein Merkmal dieser Auflauf-Radbremsen ist es, daß das Zuspannglied 8 beim Auflaufen eines Anhängers auf ein Schlepperfahrzeug durch eine Auflaufeinrichtung betätigt wird.

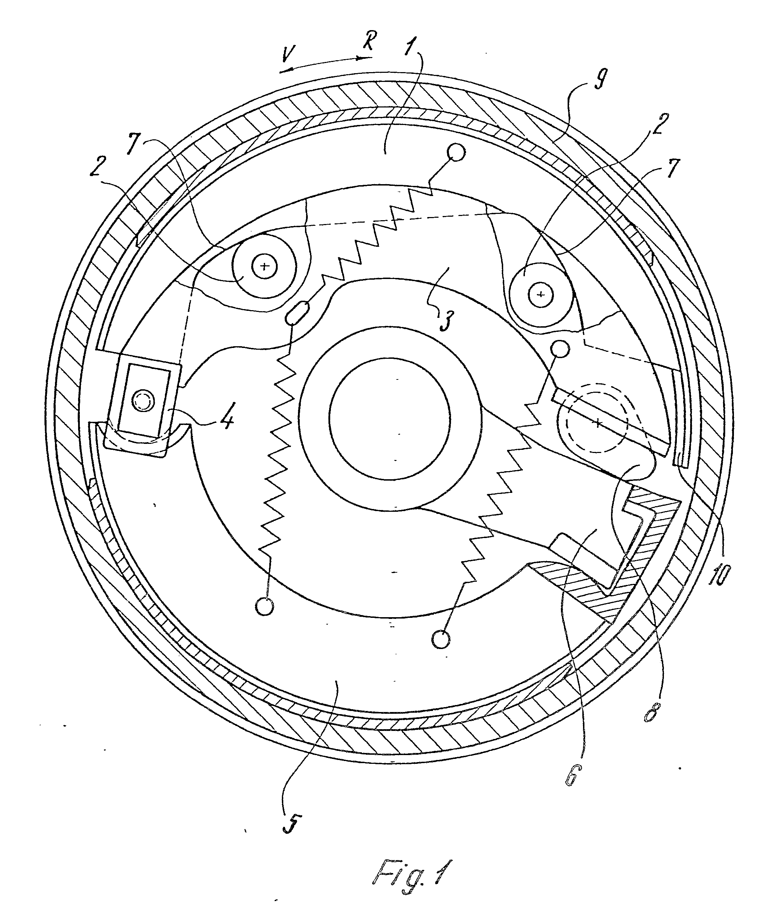

Wird nun bei Vorwärtsfahrtrichtung aus der in Fig. 1 gezeigten Normalstellung heraus das Zuspannglied 8 durch die Auflaufeinrichtung betätigt, so wird zunächst der Träger 3 geringfügig in Vorwärtsfahrtrichtung verschoben und dabei gleichzeitig gegen die Bremstrommel 9 gespreizt. Dadurch wird die erste Bremsbacke 1 an die Bremstrommel 9 angedrückt und durch den sich ergebenden Reibungsschluß wird die erste Bremsbacke 1 ebenfalls in Vorwärtsfahrtrichtung verschoben. Bei dieser Verschiebung in Umfangsrichtung läuft die erste Bremsbacke 1 entlang ihrer Steigbahnen 7 fest an die Bremstrommel 9 an und es ergeben sich sehr hohe Bremskräfte. Über den Träger 3 wird die zweite Bremsbacke 5 ebenfalls fest an die Bremstrommel 9 angedrückt, so daß ein gleichmäßiges Bremsen über beide Bremsbacken 1 und 5 erfolgt.

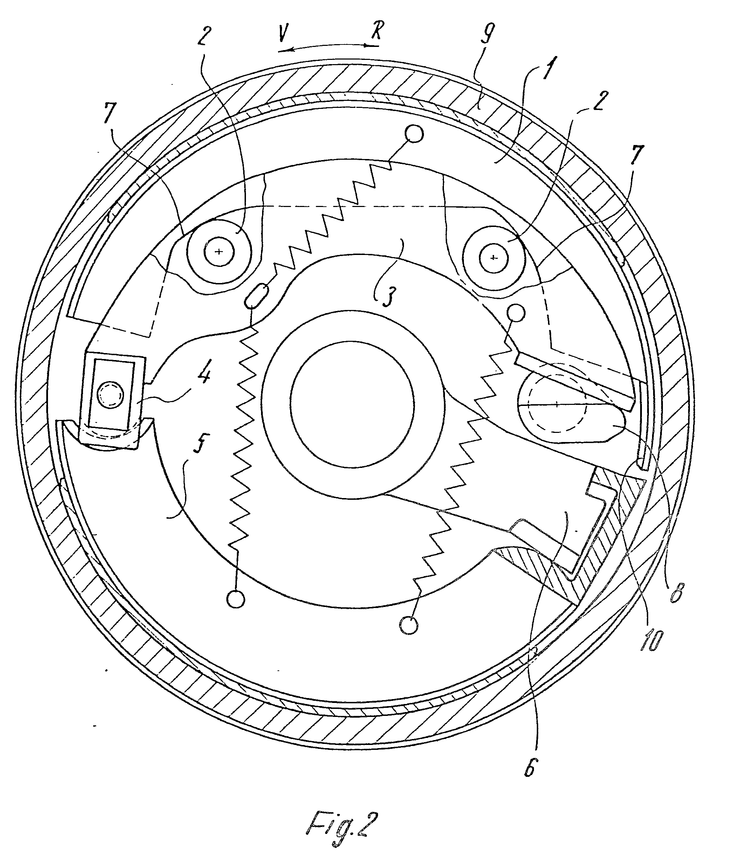

Wird ein mit einer Auflauf-Radbremse gemäß dem vorliegenden Ausführungsbeispiel ausgestattetes Anhängefahrzeug durch das Schlepperfahrzeug in Rückwärtsfahrtrichtung geschoben, so wird auch wieder über die Auflaufeinrichtung das Zuspannglied 8 betätigt, die entsprechende Stellung des Zuspanngliedes 8 ist aus Fig. 2 ersichtlich. Da nun bei Rückwärtsfahrtrichtung die erste Bremsbacke 1 durch den zwischen ihrem Reibbelag und der Bremstrommel 9 sich ergebenden Reibungsschluß in Rückwärtsfahrtrichtung verschoben wird, kann diese erste Bremsbacke 1 entlang ihrer Steigbahnen 7 »frei laufen«, d. h. eine Bremswirkung beim Rückwärtsfahren tritt nicht ein.

Bei Auflauf-Radbremsen mit sogenannter »Rückfahr-Automatik« ist es üblich, über eine Handbremseinrichtung das Zuspannglied 8 weiter verstellen zu können, als dies über die Auflaufeinrichtung der Fall ist. Diese Konstruktion ist auch bei der vorliegenden Auflauf-Radbremse verwirklicht und durch die über eine Handbremseinrichtung mögliche größere Verstellung des Zuspanngliedes wird der Träger 3 gegenüber der Bremstrommel 9 erheblich weiter gespreizt, als dies durch die Auflaufeinrichtung der Fall ist.

Diese stärkere Spreizung des Trägers 3 gegen die Bremstrommel 9 hat zur Folge, daß die erste Bremsbacke 1 in Umfangsrichtung im Sinne der Rückwärtsfahrt mitgenommen wird, falls das Fahrzeug in Rückwärtsfahrtrichtung bewegt wird.

Wie aus den Zeichnungen hervorgeht, ist die erste Bremsbacke 1 mit einem Mitnehmer 10 ausgestattet, der bei Verschiebung der ersten Bremsbacke 1 in Rückwärtsfahrtrichtung auf das dem Zuspannglied 8 zugewandte Ende der zweiten Bremsbacke 5 einwirkt und diese zweite Bremsbacke 5 in Umfangsrichtung mitnimmt, d. h., die erste Bremsbacke 1 verschiebt die zweite Bremsbacke 5 in Rückwärtsfahrtrichtung. Dadurch wird auch der Träger 3 in Rückwärtsfahrtrichtung verschoben, so daß die Führungsrollen 2 entlang der Steigbahnen 7 der ersten Bremsbacke 1 in Steigrichtung vorlaufen und somit zu einer stärkeren Anpressung der ersten Bremsbacke 1 an die Bremstrommel 9 beitragen.

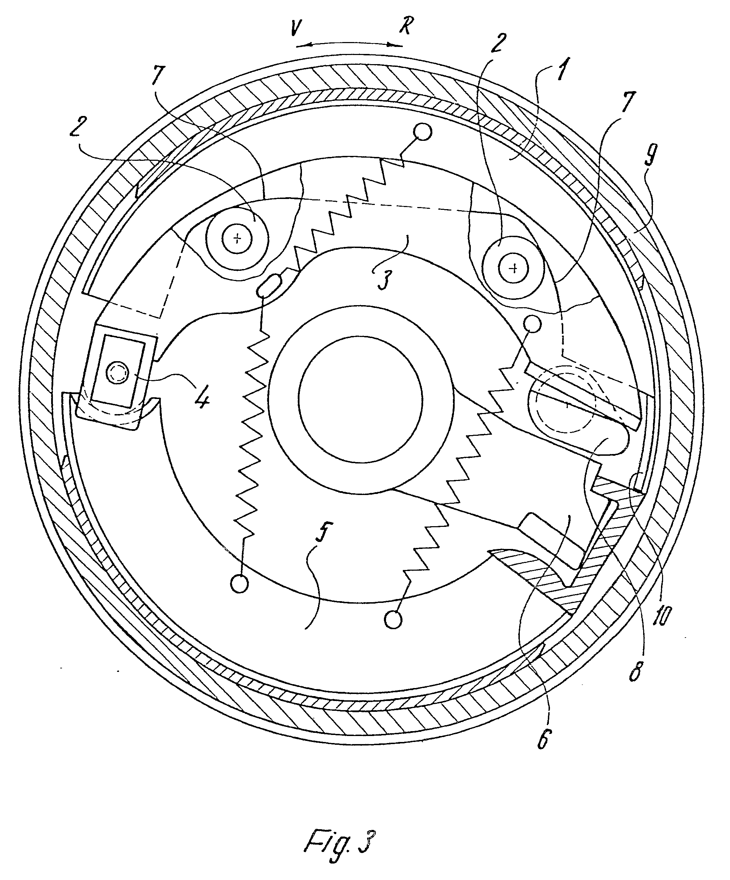

Um zu verhindern, daß das Zuspannglied 8 durch die auftretenden Bremskräfte übermäßig belastet wird, ist vorgesehen, das Zuspannglied 8 über eine Betätigungseinrichtung zu bewegen, die eine Verschwenkung des Zuspanngliedes 8 entgegen der Wirkung der Zuspannkraft ermöglicht, falls die auftretenden Bremskräfte größer sind als die Zuspannkraft, was bei Abbremsung in Rückwärtsfahrtrichtung der Fall ist. Aus Fig. 3 geht hervor, daß bei Abbremsen in Rückwärtsfahrtrichtung das Zuspannglied 8 in Richtung des Widerlagers 6 zurückgeschwenkt wird und letztendlich am Widerlager 6 zur Anlage kommt, so daß die auftretenden Bremskräfte vom Widerlager 6 abgefangen werden.

Die vorliegende Erfindung ist selbstverständlich nicht auf das in den Zeichnungen dargestellte Ausführungsbeispiel beschränkt, da statt der Führungsrollen 2 am Träger 3 auch Führungsnokken oder ähnliche Bauteile vorgesehen sein können, weiterhin ist es denkbar, daß die Erfindung auch bei einer Radbremse ohne Auflaufeinrichtung verwirklicht wird.

Bei einer Radbremse ohne Auflaufeinrichtung wird das Zuspannglied 8 beispielsweise über einen Druckmittelzylinder betätigt, so daß in beiden Fahrtrichtungen der Bremsvorgang ausschließlich durch Betätigung des Zuspanngliedes 8 eingeleitet wird. In einem solchen Falle ist es vorteilhaft, den Mitnehmer 10 od. dgl. so lang auszubilden, daß dieser Mitnehmer 10 im ungebremsten Zustand fast unmittelbar an dem ihm zugewandten Ende der zweiten Bremsbacke 5 liegt, so daß bei Rückwärtsfahrt und bei Betätigung des Zuspanngliedes 8 die Bremswirkung ohne jede Verzögerung eintritt.

Das Mitnahmestück 4, über das der Träger 3 und die zweite Bremsbacke 5 gegeneinander abgestützt sind, ist vorteilhafterweise als Nachstellvorrichtung ausgebildet, die bei entsprechend großem Verschleiß der Bremsbeläge ein Auseinanderspreizen von Träger 3 und zweiter Bremsbacke 5 ermöglicht.

1 erste Bremsbacke
2 Führungsrollen
3 Träger
4 Mitnahmestück
5 zweite Bremsbacke
6 Widerlager
7 Steigbahnen
8 Zuspannglied
9 Bremstrommel
10 Mitnehmer

**Patentansprüche**

1. Radbremse, insbesondere Auflauf-Radbremse, bei der die bei Vorwärtsfahrt auflaufende erste Bremsbacke (1) auf mindestens einem Führungsnocken, einer Führungsrolle (2) od. dgl. eines Trägers (3) gelagert ist, der durch ein in Auflaufrichtung der ersten Bremsbacke (1) wirkendes Zuspannglied (8) gegen die Bremstrommel (9) spreizbar ist und mit einer dem Zuspannglied (8) abgewandten Kante (bei 4) an der zweiten Bremsbacke (5) in Umfangsrichtung abgestützt ist, wobei die erste Bremsbacke (1) in den Bereichen, in denen sie auf den Führungsnocken, Führungsrollen (2) od. dgl. aufliegt, mit Steigbahnen (7) versehen ist, die mit der äußeren Krümmung der Bremsbacke (1) jeweils eine sich in Auflaufrichtung verjüngende Keilfläche einschließen und die zweite Bremsbacke (5) bei Vorwärtsfahrt an einem festen Widerlager (6) abgestützt ist, dadurch gekennzeichnet, daß die zweite Bremsbacke (5) durch einen beim Abbremsen in Rückwärtsfahrtrichtung auf ihr dem Zuspanngliied (8) zugewandtes Ende einwirkenden Vorsprung, Mitnehmer (10) od. dgl. der ersten Bremsbacke (1) in Umfangsrichtung verschiebbar ist.

2. Radbremse nach Anspruch 1, dadurch gekennzeichnet, daß das Zuspannglied (8) über eine drehelastische und belastungsabhängige Betätigungseinrichtung verschwenkbar ist.

## Claims

1. A wheel brake, in particular an overrun wheel brake, wherein the first brake shoe (1) which is applied in forward travel is mounted on at least one guide cam, guide roller (2) or the like of a carrier (3) which can be expanded towards the brake drum (9) by an operating member (8) which acts in the direction of application of the first brake shoe (1), the carrier (3) bearing in the peripheral direction against the second brake shoe (5) by means of an edge (at 4) which is remote from the operating member (8), wherein, in the regions in which the first brake shoe (1) bears against the guide cams or the guide rollers (2) or the like, the first brake shoe (1) is provided with lifting surfaces (7) which, with the outside curvature of the brake shoe (1), each enclose a tapered area which tapers inwardly in the direction of overrun application of the brake, and wherein the second brake shoe (5) bears against a fixed abutment (6) in forward travel, characterised in that the second brake shoe (5) is displaceable in the peripheral direction by a projection, entrainment means (10) or the like on the first brake shoe (1), said projection, entrainment means or the like acting on the end of the second brake shoe which is towards the operating member (8) when braking in the direction of rearward travel.

2. A wheel brake according to claim 1 characterised in that the operating member (8) is pivotal by way of a rotationally resilient loading-dependent actuating means.

## Revendications

1. Frein de roue, notamment frein de roue actionné par inertie, dans lequel le secteur primaire (1), comprimé en marche avant, est monté sur au moins une came, un galet (2) ou autre organe de guidage similaire d'un support (3) qui peut être écarté contre le tambour (9) par un organe de serrage (8) agissant dans le sens de compression du secteur primaire (1) et qui prend appui par un bord (en 4) éloigné de l'organe de serrage (8) contre le secteur secondaire (5) dans le sens périphérique, le secteur primaire (1) étant, dans les zones où il repose sur la came, le galet (2) ou autre organe de guidage similaire, muni de rampes (7) qui définissent chacune entre elles et la courbure extérieure du secteur primaire (1) une surface cunéiforme qui se rétrécit dans le sens de compression, et le secteur secondaire (5) prenant appui, en marche avant, contre une butée fixe (6), caractérisé en ce que le secteur secondaire (5) est déplaçable dans le sens périphérique par une saillie, un organe d'entraînement (10) ou autre similaire du secteur primaire (1), qui, lorsqu'on freine en marche arrière, agit sur l'extrémité su secteur secondaire tournée vers l'organe de serrage.

2. Frein selon la revendication 1, caractérisé en ce que l'organe de serrage (8) peut pivoter sous l'action de moyens élastiques en rotation et qui agissent en fonction de la charge.

Fig. 1

Fig.2

*Fig. 3*